# EUROPÄISCHE PATENTSCHRIFT

(11) **EP 0 606 545 B1**
(45) Veröffentlichungstag und Bekanntmachung des Hinweises auf die Patenterteilung: **18.03.1998**
(21) Anmeldenummer: 93117368.6
(22) Anmeldetag: 27.10.1993
(51) Int. Cl.: F16C 1/14, F16G 11/02

(54) **Betätigungsseil für insbesondere Seilzüge**
Transmitting cable, especially pull cable
Câble de commande, en particulier tirants à câble

(30) Priorität: 09.01.1993 DE 9300199 U
(43) Veröffentlichungstag der Anmeldung: 20.07.1994
(73) Patentinhaber: VOFA-WERK XAVIER VORBRÜGGEN GmbH & Co. KG, D-40549 Düsseldorf (DE)
(72) Erfinder:
(74) Vertreter: Paul, Dieter-Alfred, Dipl.-Ing.

(56) Entgegenhaltungen:
- DE-A- 3 220 984
- FR-A- 587 620
- GB-A- 2 150 164
- US-A- 1 785 522
- US-A- 3 471 904

## Beschreibung

Die Erfindung betrifft ein Betätigungsseil für insbesondere Seilzüge mit einem Drahtseil und wenigstens einem an einer Anschlußstelle mit Preßsitz am Drahtseil gehaltenen Anschlußstück. Die Erfindung betrifft des weiteren ein Verfahren zur Herstellung des Betätigungsseil für insbesondere Seilzüge, bei dem ein Drahtseil mit wenigstens einem aufgepreßten Anschlußstück versehen wird.

Seilzüge sind in vielfältigen Ausführungsformen bekannt und werden insbesondere im Automobilbau beispielsweise zur Betätigung von Drosselklappen, Bremsen, Getrieben und Schlössern von Hauben sowie Teilen, an die hohe Sicherheitsanforderungen gestellt werden, wie Gurtstrammer oder dergleichen verwendet. Sie bestehen im wesentlichen aus einem Drahtseil und einem dieses umgebenden schlauchförmigen Mantel. Beide sind in der Regel biegsam ausgebildet, so daß der Seilzug eine Kraftübertragung auch an schwierig zugänglichen Stellen ermöglicht.

Das Drahtseil steht an beiden Enden des Mantels vor und ist dort mit jeweils einem Anschlußstück versehen. Über diese Anschlußstücke wird das Drahtseil mit einerseits dem zu betätigenden Organ und andererseits dem Betätigungsorgan verbunden. Die Anschlußstücke sind dabei an die vorgenannten Organe angepaßt. Vielfach sind hierzu die Anschlußstücke mit einem Gewinde versehen. Dies setzt entsprechend den auftretenden Kräften in der Regel voraus, daß das Anschlußstück aus Stahl oder einem ähnlich festen Metall besteht. Solche Anschlußstücke werden an den Anschlußstellen, die nicht notwendigerweise an den Drahtseilenden liegen müssen, auf das Drahtseil direkt aufgepreßt. Hierzu weisen die Anschlußstücke runde oder eckige Durchgangs- oder Sacklöcher auf, mit denen sie auf das Drahtseil aufgeschoben werden. Durch anschließende radiale Druckausübung entsteht dann ein Preßsitz (vergl. z.B. FR-A-587 620 oder US-A-3 471 904).

Damit der Preßsitz eine Kraftübertragung in der gleichen Größenordnung wie das Drahtseil selbst zuläßt, müssen hohe Preßkräfte aufgewandt werden. Dabei kann es jedoch leicht zu Beschädigungen des Drahtseils an der Anschlußstelle kommen, die die Verbindung zwischen Drahtseil und Anschlußstücken beeinträchtigt. Es ist deshalb sehr schwierig, die Verbindung zwischen Drahtseil und Anschlußstück so auszubilden, daß sie nicht schwächer ist als die Festigkeit des Drahtseils selbst, zumal Beschädigungen des Drahtseils auf Grund zu großer Preßeinwirkung optisch nicht oder nicht ohne weiteres d.h. nur mit großem Prüfaufwand erkennbar sind.

Der Erfindung liegt deshalb die Aufgabe zugrunde, ein Betätigungsseil mit am Drahtseil durch Preßsitz gehaltenem Anschlußstück bereitzustellen, bei dem die Verbindung zwischen Drahtseil und Anschlußstück einerseits hochfest ist und andererseits deren Herstellung nicht zu Beschädigungen des Drahtseils führt.

Diese Aufgabe wird erfindungsgemäß durch folgende Merkmale gelöst:
a) jeweils an der Anschlußstelle sitzt ein im flüssigen Zustand aufgebrachtes Zwischenstück;
b) das Zwischenstück besteht aus einem Material,
   aa) dessen Schmelztemperatur so viel niedriger als die des Materials des Drahtseils ist, daß das Drahtseil beim Aufbringen des Zwischenstückes nicht beschädigt wird;
   bb) das bei Normaltemperatur plastisch verformbar ist;
c) das Anschlußstück ist mit Preßsitz auf dem Zwischenstück gehalten.

Nach der Erfindung sitzt also das Anschlußstück nicht mehr - wie im Stand der Technik - direkt auf dem Drahtseil, sondern ist auf ein Zwischenstück aufgepreßt, das zuvor an der jeweiligen Anschlußstelle auf das Drahtseil in flüssigem Zustand, beispielsweise durch Spritz- oder Druckguß, aufgebracht worden ist. Letzteres hat zur Folge, daß das Material des Zwischenstückes in die Vertiefungen des Drahtseils eindringt, so daß zwischen Drahtseil und Zwischenstück eine formschlüssige Verbindung hergestellt wird.

Damit einerseits eine Beschädigung des Drahtseils vermieden wird, andererseits ein sicherer Preßsitz des Anschlußstückes auf dem Zwischenstück gewährleistet ist, sollten zwei Bedingungen erfüllt sein. Zum einen muß die Schmelztemperatur des Materials des Zwischenstücks zwecks Vermeidung von Beschädigungen des Drahtseils niedriger als die des Materials des Drahtseils liegen. Zum anderen sollte das Material des Zwischenstücks bei Normaltemperatur nicht spröde sein, um einen festen Preßsitz ohne Zerstörung des Zwischenstückes zu ermöglichen. Dabei ist unter Normaltemperatur ein solcher Temperaturbereich zu verstehen, bei dem das erfindungsgemäße Betätigungsseil zum Einsatz kommt.

Die Vorzüge der erfindungsgemäßen Verbindung zwischen Anschlußstück und Drahtseil liegen darin, daß einerseits das Anschlußstück aus hochfestem Material, wie es beispielsweise für Schraubverbindungen notwendig ist, bestehen kann und andererseits darin, daß mit dem Anbringen des Anschlußstückes nicht die Gefahr der Zerstörung des Drahtseils selbst besteht. Ferner ist sichergestellt, daß die Abzugskräfte der Verbindung mindestens der Zugfestigkeit des Seils entsprechen, was insbesondere für die Verbindung mit Teilen wichtig ist, an die hohe Sicherheitsanforderungen gestellt werden.

Im Stand der Technik ist es zwar bekannt, Anschlußstücke aus einem solchen Material, beispielsweise aus Zink, auf die Anschlußstellen eines Drahtseils mittels Druckguß aufzubringen. Die Anschlußstücke solcher Betätigungsseile werden dann in das zu betätigende Organ und in das Betätigungsorgan eingehängt. Da das Material jedoch relativ weich ist, eignet es sich nicht für Schraubverbindungen oder ähnliches. Solche Betätigungsseile sind deshalb nicht für Einsatzfälle geeignet, für die das gattungsgemäße Betätigungsseil bestimmt ist.

In Ausbildung der Erfindung ist vorgesehen, daß das Anschlußstück jeweils unter Ausbildung einer Einschnürung auch im Zwischenstück aufgepreßt ist, wobei vorzugsweise beidseits der Einschnürung gegenüber dieser verdickte Querschnitte vorhanden sein sollten. Auf diese Weise entsteht eine Kombination aus kraft- und formschlüssiger Verbindung, die sich durch hohe Festigkeit auszeichnet.

Als Material für das Zwischenstück kommen insbesondere Metalle bzw. Metallegierungen infrage, die die vorgenannten Bedingungen erfüllen. Geeignet hierfür sind druckgußfähige Materialien, wie beispielsweise Zink oder Messing. Es besteht jedoch auch die Möglichkeit, für das Zwischenstück ein Kunststoffmaterial, beispielsweise thermoplastische Kunststoffe in High-Density Ausführung, zu verwenden.

Das erfindungsgemäße Herstellungsverfahren ist dadurch gekennzeichnet, daß an der Anschlußstelle zumindest ein Zwischenstück mittels Druck- oder Spritzguß aufgebracht und anschließend das Anschlußstück auf das Zwischenstück vorzugsweise unter dessen plastischer Verformung aufgepreßt wird. Mit diesem Verfahren wird ein Betätigungsseil erhalten, bei dem die Verbindung zwischen Drahtseil und Anschlußstück hohe Festigkeit hat, ohne daß eine Beschädigung des Drahtseils bei der Herstellung in Kauf genommen werden muß. Dabei sollte das Aufpressen des Anschlußstückes in der Weise erfolgen, daß das Zwischenstück eine Einschnürung erhält und die Einschnürung zwischen den beiden Enden des Zwischenstückes eingeformt wird.

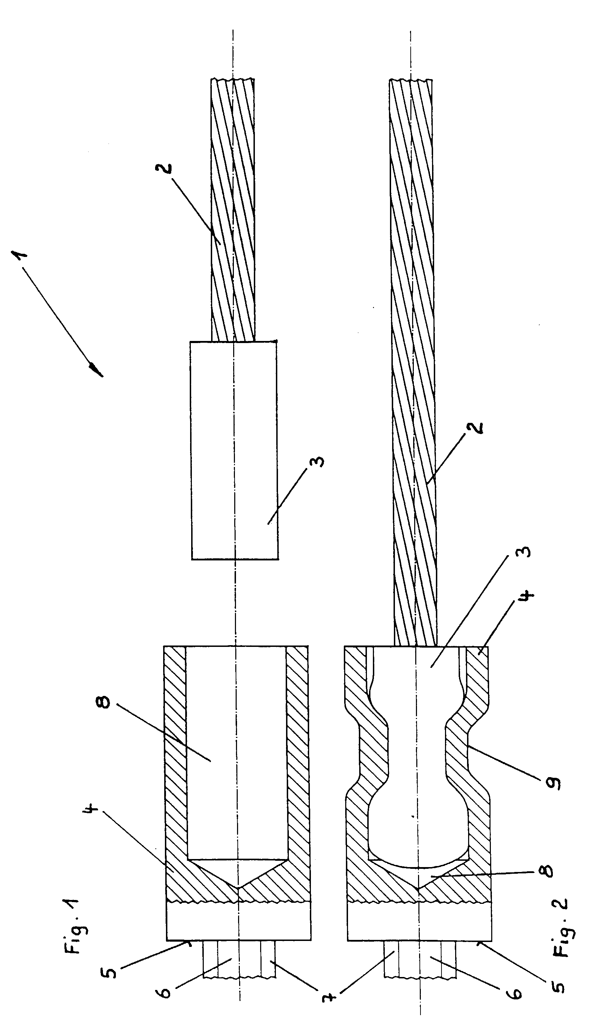

In der Zeichnung ist die Erfindung an Hand eines Ausführungsbeispiels näher veranschaulicht. Es zeigen:
- Figur (1): die Seitenansicht eines Betätigungsseils mit teilweise geschnittenem Anschlußstück vor der Verbindung von Anschlußstück und Zwischenstück und
- Figur (2): die Seitenansicht des Betätigungsseils gemäß Figur (1) mit Teilschnitt durch das Anschlußstück in fertigem Zustand.

Von dem in den Figuren dargestellten Betätigungsseil (1) ist nur ein Ende dargestellt. Das andere Ende kann entsprechend ausgebildet sein. Das Betätigungsseil (1) hat ein aus mehreren Litzen bestehendes Drahtseil (2), wobei die Litzen aus Stahl bestehen. Das Drahtseil (2) entspricht dem Stand der Technik.

Auf das Ende des Drahtseils (2) ist ein zunächst zylindrisches Zwischenstück (3) mittels Druckguß aufgebracht. Das Zwischenstück (3) besteht aus einer Zinklegierung und umgibt das Ende des Drahtseils (2).

In Figur (1) ist ferner ein getrennt davon dargestelltes Anschlußstück (4) teilweise geschnitten dargestellt. Das Anschlußstück (4) hat ebenfalls die Form eines Zylinders und ist an seiner geschlossenen Stirnseite (5) mit einer nur teilweise dargestellten Fortsetzung (6) versehen, in deren Außenseite ein Gewinde (7) eingeformt ist. Über das Anschlußstück (4) bzw. dessen Fortsetzung (6) kann eine Verbindung zu einem Betätigungsorgan bzw. zu einem zu betätigenden Organ hergestellt werden.

Das Anschlußstück (4) beinhaltet eine kreisförmige Sackbohrung (8), die zu dem Zwischenstück (3) hin offen ist und deren Innendurchmesser etwas größer ist als der Außendurchmesser des Zwischenstücks (3). Dies ermöglicht es, das Anschlußstück (4) auf das Zwischenstück (3) aufzuschieben, und zwar so weit, bis das Zwischenstück (3) vollständig in der Sackbohrung (8) aufgenommen ist.

Nach dem Aufschieben wird auf den Bohrungsmantel des Anschlußstückes (4) eine über den gesamten Umfang gehende, radial nach innen gerichtete Preßkraft mittels eines hier nicht näher dargestellten Gerätes oder Maschine aufgebracht, und zwar beschränkt auf einen solchen Bereich, daß sich die in Figur (2) dargestellte Einschnürung (9) ergibt. Die Einschnürung führt zu einer entsprechenden plastischen Verformung des Zwischenstückes (3), wobei Material des Zwischenstückes (3) in die der Einschnürung (9) benachbarten Bereiche verdrängt und hier zu entsprechenden Verdickungen führt. Auf diese Weise entsteht die Kombination einer form- und kraftschlüssigen Verbindung zwischen Anschlußstück (4) und Zwischenstück (3).

## Patentansprüche

1. Betätigungsseil für insbesondere Seilzüge, mit einem Drahtseil und wenigstens einem an eine Anschlußstelle mit Preßsitz am Drahtseil gehaltenen Anschlußstück, gekennzeichnet durch folgende Merkmale:
a) jeweils an der Anschlußstelle sitzt auf dem Drahtseil (2) ein im flüssigen Zustand aufgebrachtes Zwischenstück (3);
b) das Zwischenstück (3) besteht aus einem Material,
aa) dessen Schmelztemperatur so viel niedriger als die des Materials des Drahtseils (2) ist, daß das Drahtseil (2) beim Aufbringen des Zwischenstücks (3) nicht beschädigt wird;
bb) das bei Normaltemperatur plastisch verformbar ist;
c) das Anschlußstück (4) ist mit Preßsitz auf dem Zwischenstück (3) gehalten.

2. Betätigungsseil nach Anspruch (1),
dadurch gekennzeichnet, daß das Anschlußstück (4) jeweils unter Ausbildung einer Einschnürung (9) auch im Zwischenstück (3) aufgepreßt ist.

3. Betätigungsseil nach Anspruch (2),
dadurch gekennzeichnet, daß das Zwischenstück (3) beidseits der Einschnürung (9) gegenüber dieser verdickte Querschnitte hat.

4. Betätigungsseil nach einem der Ansprüche (1) bis (3),
dadurch gekennzeichnet, daß das Zwischenstück aus einem Metall bzw. einer Metallegierung, z. B. Zink oder Messing, besteht.

5. Betätigungsseil nach einem der Ansprüche (1) bis (3),
dadurch gekennzeichnet, daß das Zwischenstück (3) aus einem Kunststoffmaterial besteht.

6. Verfahren zur Herstellung des Betätigungsseils für insbesondere Seilzüge, bei dem ein Drahtseil mit wenigstens einem aufgepreßten Anschlußstück versehen wird,
dadurch gekennzeichnet, daß an der Anschlußstelle zumindest ein Zwischenstück (3) mittels Druck- oder Spritzguß aufgebracht und anschließend das Anschlußstück (4) auf das Zwischenstück (3) aufgepreßt wird.

7. Verfahren nach Anspruch (6),
dadurch gekennzeichnet, daß das Aufpressen des Anschlußstückes (4) in der Weise erfolgt, daß das Zwischenstück (3) eine Einschnürung (9) erhält.

8. Verfahren nach Anspruch (7),
dadurch gekennzeichnet, daß die Einschnürung (9) zwischen den beiden Enden des Zwischenstückes (3) eingeformt wird.

## Claims

1. Actuating cable for Bowden controls in particular, having a wire cable and at least one connector which is press-fitted onto a connecting point on the wire cable, characterised by the following features:
a) an adapter (3) mounted in a liquid state sits on the wire cable (2) at each connecting point;
(b) the adapter (3) consists of a material
aa) the fusion temperature of which is so much lower than that of the material of the wire cable (2) that the wire cable (2) is not damaged as the adapter (3) is being mounted;
bb) which can be plastically deformed at a standard temperature;
c) the connector (4) is held on the adapter (3) by a press-fit.

2. Actuating cable according to claim 1, characterised in that the connector (4) is also press-fitted into place in the adapter (3), in each case forming a neck (9).

3. Actuating cable according to claim 2, characterised in that on either side of the neck (9) the adapter (3) has thickened cross-sections relative to said neck (9).

4. Actuating cable according to any of claims 1 to 3, characterised in that the adapter is made from a metal or a metal alloy, e.g. zinc or brass.

5. Actuating cable according to any of claims 1 to 3, characterised in that the adapter (3) is made from a polymer material.

6. Process for manufacturing the actuating cable for Bowden controls in particular, in which a wire cable is provided with at least one press-fitted connector, characterised in that at least one adapter (3) is mounted at the connecting point using diecasting or injection moulding and then the connector (4) is press-fitted onto the adapter (3).

7. Process according to claim 6, characterised in that the connector (4) is press-fitted in such a way that the adapter (3) is given a neck (9).

8. Process according to claim 7, characterised in that the neck (9) is moulded between the two ends of the adapter (3).

## Revendications

1. Câble de commande, en particulier pour des commandes Bowden, avec un câble métallique et au moins une pièce de raccordement maintenue sur le câble métallique par ajustement serré en un point de raccordement, **caractérisé** par les caractéristiques suivantes :
a) une pièce intermédiaire (3), appliquée à l'état liquide, est montée sur le câble métallique (2) au point de raccordement respectif ;
b) la pièce intermédiaire (3) est constituée d'un matériau
ba) dont la température de fusion est suffisamment inférieure à celle du matériau du câble métallique (2) pour que le câble métallique (2) ne soit pas détérioré lors de l'application de la pièce intermédiaire (3) ;
bb) qui est plastiquement déformable à la température normale ;
c) la pièce de raccordement (4) est maintenue par ajustement serré sur la pièce intermédiaire (3).

2. Câble de commande selon la revendication 1, **caractérisé** en ce que la pièce de raccordement respective (4) est emmanchée par pression en formant également un rétrécissement (9) dans la pièce intermédiaire (3).

3. Câble de commande selon la revendication 2, **caractérisé** en ce que la pièce intermédiaire (3) possède, de part et d'autre du rétrécissement (9), des sections épaissies par rapport à ce dernier.

4. Câble de commande selon une des revendications 1 à 3, **caractérisé** en ce que la pièce intermédiaire est réalisée en métal ou en alliage métallique, par exemple en zinc ou en laiton.

5. Câble de commande selon une des revendications 1 à 3, **caractérisé** en ce que la pièce intermédiaire (3) est réalisée en matière plastique.

6. Procédé de fabrication du câble de commande, en particulier pour des commandes Bowden, selon lequel un câble métallique est pourvu d'au moins une pièce de raccordement emmanchée par pression, **caractérisé** en ce qu'au moins une pièce intermédiaire (3) est appliquée au point de raccordement par moulage sous pression ou moulage par injection, à la suite de quoi la pièce de raccordement (4) est emmanchée par pression sur la pièce intermédiaire (3).

7. Procédé selon la revendication 6, **caractérisé** en ce que l'emmanchement par pression de la pièce de raccordement (4) s'effectue de telle sorte que la pièce intermédiaire (3) subit un rétrécissement (9).

8. Procédé selon la revendication 7, **caractérisé** en ce que le rétrécissement (9) est formé entre les deux extrémités de la pièce intermédiaire (3).
